(19) Europäisches Patentamt

European Patent Office

Office européen des brevets

(11) **EP 2 597 326 A1**

(12) **EUROPEAN PATENT APPLICATION**
published in accordance with Art. 153(4) EPC

(43) Date of publication:
**29.05.2013 Bulletin 2013/22**

(21) Application number: **11809704.7**

(22) Date of filing: **21.07.2011**

(51) Int Cl.:
*F16C 19/52* $^{(2006.01)}$     *F16C 41/00* $^{(2006.01)}$

(86) International application number:
**PCT/JP2011/066598**

(87) International publication number:
**WO 2012/011534 (26.01.2012 Gazette 2012/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.07.2010 JP 2010163774**

(71) Applicant: **Hitachi Construction Machinery Co., Ltd.**
**Bunkyou-ku**
**Tokyo 112-0004 (JP)**

(72) Inventor: **YAMAMOTO, Shinjiro**
**Tsuchiura-shi**
**Ibaraki 300-0013 (JP)**

(74) Representative: **Jansen, Cornelis Marinus et al**
**V.O.**
**Johan de Wittlaan 7**
**2517 JR Den Haag (NL)**

(54) **METHOD FOR DETECTING DAMAGE OF BEARING**

(57) A bearing damage detection method, comprising: executing frequency analysis for a vibration waveform of the vibration at the bearing obtained through measurement by sensor; setting at least two frequency ranges each substantially equal to a range defined by a rotation frequency fr of the moving ring which do not overlap, based upon results of the frequency analysis; obtaining peak frequencies, each manifesting in one of the plurality of frequency ranges having been set; and determining that the bearing is to be damaged upon deciding that the difference between the peak frequencies and the k multiple of the rotation frequency fr having been compared with each other may be regarded to be matched.

FIG.3

**Description**

The present invention relates to a method for detecting damage to a bearing.

BACKGROUND ART

There are methods known in the related art adopted for detecting damage to a bearing comprising an inner ring, an outer ring and rolling elements (ball or roller) that roll in contact with the inner ring and the outer ring and a cage that holds the rolling elements. In such a detection method in the related art, the vibration acceleration manifesting while the inner ring or the outer ring rotates is measured, the waveform obtained through the measurement undergoes envelope processing and then frequency analysis, and damage to the bearing is detected based upon the peak in a characteristic frequency of the vibration caused by the damage (see patent literature 1).

CITATION

PATENT LITERATURE

Patent literature 1: Japanese Laid Open Patent Publication No. H9-257651

SUMMARY OF THE INVENTION

TECHNICAL PROBLEMS

The bearing damage detection method disclosed in the patent literature cited above is characterized in that damage is detected by factoring in the beat component generated as the vibration with the characteristic frequency caused by the damage, is amplitude-modulated by vibration with a rotation frequency, in addition to the characteristic frequency of the vibration caused by the damage. The damage sustained at the surface of the inner ring, the outer ring or a rolling element can be detected based upon characteristic frequencies, i.e., the frequency at which one point of the inner ring passes the rolling element, the frequency at which one point of the outer ring passes the rolling element and the frequency at which one point of the rolling element passes the inner ring and the outer ring. Theoretically, these characteristic frequencies can be determined based upon the diameter of the rolling element, the pitch circle diameter of the rolling elements, the number of rolling elements, the contact angle of the rolling element and the rotation number of the rotating ring, i.e., the inner ring or the outer ring, as long as no slippage occurs between the rolling element and the inner/outer rings. However, the likelihood of slippage between the rolling element and the inner/outer rings is high enough that it cannot be disregarded in real world bearings. A challenge, therefore, arises in that the characteristic frequencies in the event of slippage cannot be calculated through the theoretical approach.

SOLUTION TO PROBLEMS

According to first aspect of the present invention, a bearing damage detection method for detecting damage to a bearing, comprising an inner ring, an outer ring, rolling elements that roll in contact with the inner ring and the outer ring, and a cage that holds the rolling elements, the method comprising: measuring vibration of the bearing occurring while a moving ring, i.e., either the inner ring or the outer ring, rotates by a sensor; executing frequency analysis for a vibration waveform of the vibration at the bearing, obtained through the measuring by the sensor; setting at least two frequency ranges each substantially equal to a range defined by a rotation frequency $fr$ of the moving ring, i.e., either the inner ring or the outer ring, which do not overlap, based upon results of the frequency analysis; obtaining peak frequencies, each manifesting in one of the plurality of frequency ranges having been set; comparing a difference between the peak frequencies having been determined with a k multiple (k is an integer equal to or greater than 1) of the rotation frequency $fr$; making a decision whether or not the difference between the peak frequencies and k multiple of the rotation frequency $fr$, having been compared with each other may be regarded to be matched; and determining that the bearing is to be damaged upon deciding that the difference between the peak frequencies and the k multiple of the rotation frequency $fr$ having been compared with each other may be regarded to be matched.
According to the second aspect of the present invention, in the bearing damage detection method of the first aspect, it is preferred that obtaining highest peak frequencies, each manifesting in one of the frequency ranges that do not overlap; comparing a difference between the highest peak frequencies having been determined with the k multiple of the rotation frequency $fr$ of the moving ring, i.e., either the inner ring or the outer ring; making a decision whether or not the difference and the k multiple, having been compared may be regarded to be matched; and determining that the bearing is to be damaged upon deciding that the difference between the peak frequencies and the k multiple of the rotation frequency fr having been compared with each other may be regarded to be matched.

According to the third aspect of the present invention, a bearing damage detection method for detecting damage to a bearing, comprising an inner ring, an outer ring, rolling elements that roll in contact with the inner ring and the outer ring, and a cage that holds the rolling elements, the method comprising: measuring vibration of the bearing occurring while a moving ring, i.e., either the inner ring or the outer ring, rotates by a sensor; executing frequency analysis for a vibration waveform of the vibration at the bearing, obtained through the measuring by the sensor; setting Y frequency ranges (Y is an integer equal to or greater than 2) each substantially equal to a range defined by a rotation frequency fr of the moving ring, i.e., either the inner ring or the outer ring, which do not overlap, based upon results of the frequency analysis; obtaining highest peak frequencies, each manifesting in one of the Y frequency ranges having been set; calculating a standard deviation of values for a degree parameter $g(u) = f(u)/fr-(n+u-1)$ in correspondence to u (u is an integer equal to or greater than 1 and equal to or smaller than Y) taking values of 1 through Y, with $f(u)$ representing a highest peak frequency in a uth frequency range; and determining that the bearing is to be damaged if the standard deviation is less than a reference value.

According to the fourth aspect of the present invention, in the bearing damage detection method of third aspect, it is preferred that calculating an average value of amplitude values $a(u)$ of the highest peak frequencies $f(u)$ corresponding to u taking values of 1 through Y; and determining that the damage to the bearing is to have worsened if the average value has increased over time.

According to the fifth aspect of the present invention, in the bearing damage detection method of any of first through fourth aspect, it is preferred that either a frequency peak manifesting due to a vibration occurring as the rolling elements pass a single damage point at the inner ring or a frequency peak manifesting due to a vibration occurring as the rolling elements pass a single damage point at the outer ring, among frequency peaks determined based upon the results of the frequency analysis, is included in one of the frequency ranges that do not overlap.

According to the sixth aspect of the present invention, in the bearing damage detection method of any of first through fifth aspect, it is preferred that provided that no slippage occurs between any of the rolling elements and the inner ring or the outer ring, a value representing a sum of a product obtained by multiplying either an inner ring characteristic frequency $fi = (D+d \times \cos \alpha) \times Z \times N/(120 \times D)$ at which the rolling elements pass one point on the inner ring or an outer ring characteristic frequency $fo = (D-d \times \cos \alpha) \times Z \times N/(120 \times D)$ at which the rolling elements pass one point on the outer ring by t (t is an integer equal to or greater than 1) and a product obtained by multiplying the rotation frequency $fr = N/60$ by r (r is an integer), with d, D, Z, $\alpha$ and N respectively representing a diameter of the rolling element, a pitch circle diameter of the rolling elements, a number of rolling elements, a contact angle of the rolling element, and a rotation number of the inner ring or the outer ring, is included in each of the frequency ranges that do not overlap.

According to the seventh aspect of the present invention, in the bearing damage detection method of any of first through fifth aspect, it is preferred that the frequency ranges that do not overlap are each set above frxn (n is an integer equal to or greater than 1) and below $fr \times (n+1)$.

According to the eighth aspect of the present invention, in the bearing damage detection method of sixth aspect, it is preferred that the frequency ranges that do not overlap are each set above frxn (n is an integer equal to or greater than 1) and below $fr \times (n+1)$.

According to the ninth aspect of the present invention, in the bearing damage detection method of eighth aspect, it is preferred that (2s+1) frequency ranges (s is an integer equal to or greater than 1) are set so as not to overlap, and the (2s+1) frequency ranges include a frequency range above frxn and below $fr \times (n+1)$, a frequency range above $fr \times (n+1)$ and below $fr \times (n+2)$, ... and a frequency range above $fr \times (n+2s)$ and below $fr \times (n + 2s + 1)$.

According to the tenth aspect of the present invention, in the bearing damage detection method of ninth aspect, it is preferred that either $fi \times t$ or $fo \times t$ is included in the frequency range above $fr \times (n+s)$ and below $frx(n+s+1)$.

ADVANTAGEOUS EFFECT OF THE INVENTION

According to the present invention, damage to a bearing can be detected even when slippage occurs between the inner ring or the outer ring and the rolling element.

BRIEF DESCRIPTION OF THE DRAWINGS

(FIG. 1) A diagram showing the configuration of the bearing damage detection system according to the present invention
(FIG. 2) A sectional view of the structure adopted in a single row deep groove ball bearing
(FIG. 3) A flowchart of the bearing damage detection processing executed in a first embodiment
(FIG. 4) An example of results that may be obtained through bearing vibration waveform frequency analysis

(FIG. 5) A flowchart of the bearing damage detection processing executed in a second embodiment

(FIG. 6) An example of results that may be obtained through bearing vibration waveform frequency analysis

(FIG. 7) A flowchart of the bearing damage detection processing executed in a third embodiment

(FIG. 8) An example of results obtained through frequency analysis re-executed after the bearing to which the frequency analysis results in FIG. 6 pertain, has been used over a predetermined length of time

DESCRIPTION OF EMBODIMENTS

- First Embodiment -

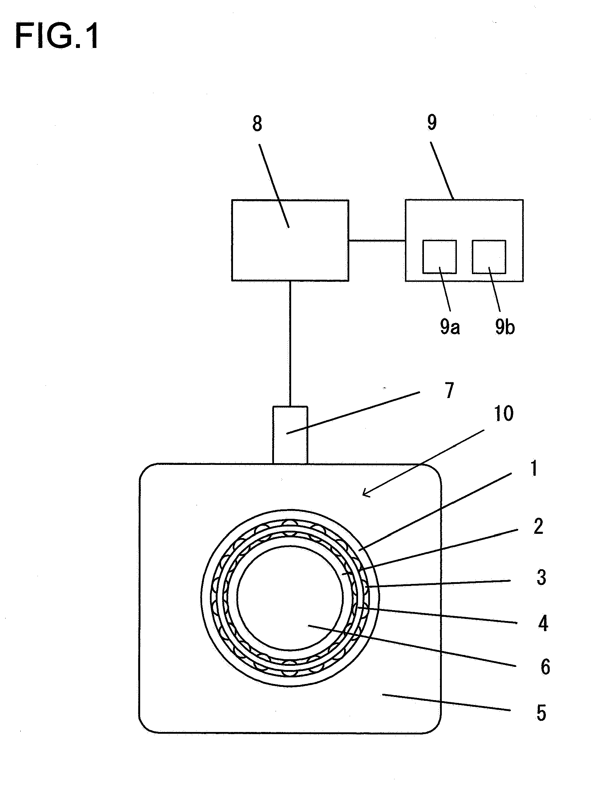

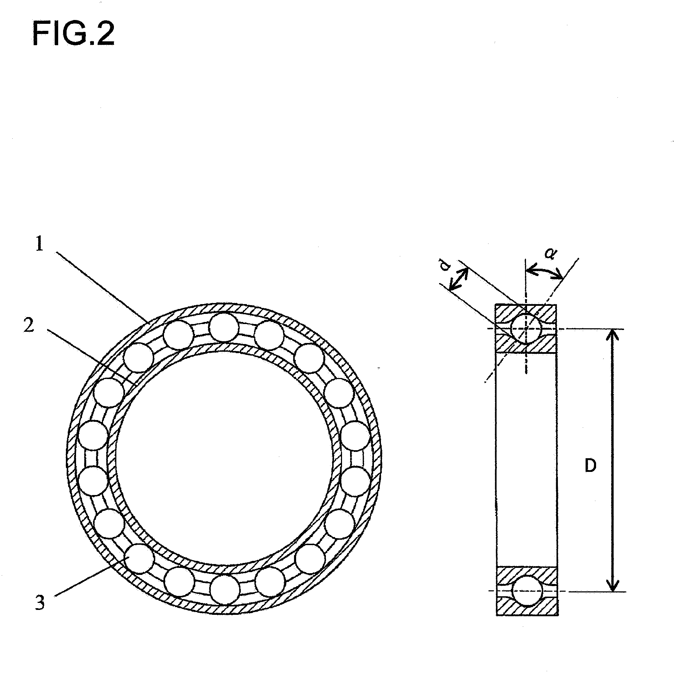

In reference to FIGS. 1 through 4, the first embodiment of the bearing damage detection method according to the present invention is described. FIG. 1 shows the configuration of a bearing damage detection system in conjunction with which the bearing damage detection method according to the present invention may be adopted. FIG. 2 is a sectional view showing the structure of a radial single-row deep-groove ball bearing, representing an example of a bearing. The bearing damage detection system achieved in the embodiment comprises an acceleration sensor 7 that measures a vibration acceleration, an amplifier 8 that amplifies a signal output from the acceleration sensor 7 and a measuring device 9 that receives the signal originating from the acceleration sensor 7 and input thereto via the amplifier 8. The bearing damage detection system in the embodiment may be a dedicated system permanently installed in an apparatus that includes a bearing damage detection target-bearing disposed thereat or it may be a portable system used to detect damage to bearings disposed at a plurality of apparatuses. The following description is given by assuming that the bearing damage detection system is permanently installed in an apparatus that includes the damage detection target-bearing disposed thereat.

The acceleration sensor 7 is a three-dimensional (tri-axial) acceleration sensor mounted at a holding member 5 holding a bearing 10 and measures the vibration acceleration of a vibration occurring at the bearing 10 via the holding member 5. It is to be noted that the holding member 5 is the member which holds the bearing 10 in the apparatus at which the bearing 10 is mounted. The holding member 5 holds an outer ring 1 of the bearing 10 in the embodiment. The acceleration sensor 7 is mounted at the holding member 5 so that at least the directions of the radius of the bearings 10 and one of the detection directions along which vibration acceleration is detected via the acceleration sensor 7 are aligned with each other.

The measuring device 9 comprises an arithmetic operation unit 9a and an alarm unit 9b. The arithmetic operation unit 9a, equipped with an arithmetic processor, a memory, peripheral circuits and the like, executes envelope processing and frequency analysis for a vibration waveform signal output from the acceleration sensor 7 and makes a decision as to whether or not there is damage to the bearing 10, as will be explained later. If the arithmetic operation unit 9a decides that the bearing 10 is damaged, an alarm is issued via the alarm unit 9b so as to alert the operator to the damage.

The bearing 10 includes an outer ring 1 that is fixed to the holding member 5, an inner ring 2 that is fixed to a shaft 6 and rotates together with the shaft 6 as the shaft 6 rotates, rolling elements 3 that roll in contact with the outer ring 1 and the inner ring 2, and the cage 4 that holds the rolling elements 3.

The bearing damage detection system configured as described above detects damage to the bearing 10 as described below. With d, D, Z, $\alpha$, and N respectively representing the diameter of the rolling element, the pitch circle diameter of the rolling elements, the number of the rolling elements, the contact angle of the rolling element, and the rotation number, a rotation frequency fr, an inner ring characteristic frequency fi, represented by the reciprocal of the cycle with which one point at the inner ring 2 passes the rolling elements 3 and an outer ring characteristic frequency fo, represented by the reciprocal of the cycle with which one point at the outer ring 1 passes the rolling elements 3, are respectively calculated as expressed in (1) through (3) below, as long as no slippage occurs between the rolling element 3 and the inner ring 2 or the outer ring 1.

$$\mathrm{fr} = \mathrm{N} / 60 \qquad \ldots (1)$$

$$\mathrm{fi} = (\mathrm{D} + \mathrm{d} \times \cos\alpha) \times \mathrm{Z} \times \mathrm{N} / (120 \times \mathrm{D}) \qquad \ldots (2)$$

$$\mathrm{fo} = (\mathrm{D} - \mathrm{d} \times \cos\alpha) \times \mathrm{Z} \times \mathrm{N} / (120 \times \mathrm{D}) \qquad \ldots (3)$$

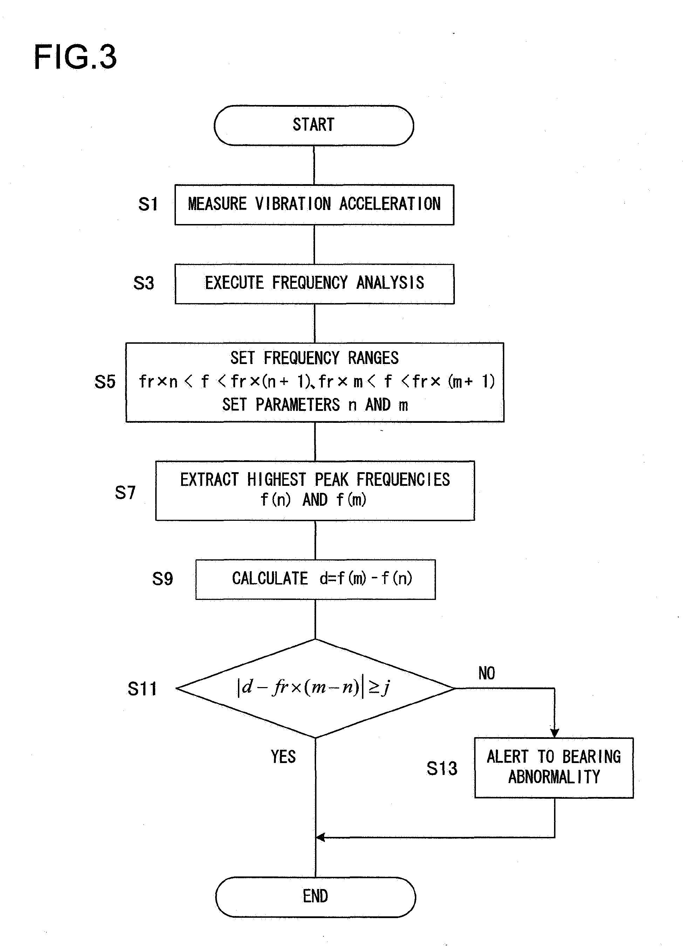

FIG. 3 presents a flowchart of the bearing damage detection processing executed in the first embodiment. It is to be noted that the processing executed to detect damage to the inner ring 2, is described in specific detail below as a representative example. As a power switch (not shown) at the bearing damage detection system is turned on and a bearing damage detection start instruction is issued, a program enabling execution of this processing is cyclically (e.g., every few seconds) started up and the program thus started up is executed by the arithmetic operation unit 9a of the measuring device 9. In step S1, the vibration acceleration of vibration occurring at the bearing 10 is measured, i.e., a signal originating from the acceleration sensor 7 and input via the amplifier 8 is read, and then the operation proceeds to step S3. In step S3, frequency analysis of the known art is executed for the vibration waveform of the vibration acceleration measured in step S1, and then the operation proceeds to step S5.

In step S5, a first frequency range and a second frequency range are set as described below for the results of the frequency analysis executed in step S3. The first frequency range is above $fr \times n$ (n is an integer equal to or greater than 1) and below $fr \times (n+1)$, with n set so that a value representing the sum of the product obtained by multiplying the theoretical inner ring characteristic frequency fi by t (t is an integer equal to or greater than 1) and the product obtained by multiplying the rotation frequency fr by r (r is an integer) falls within the range. The second frequency range is above $fr \times m$ (m is an integer equal to or greater than 1 but not equal to n) and below $fr \times (m+1)$, with m set so that a value representing the sum of the product obtained by multiplying the theoretical inner ring characteristic frequency fi by c (c is an integer equal to or greater than 1) and the product obtained by multiplying the rotation frequency fr by e (e is an integer) falls within the range.

Depending upon the apparatus in which the bearing 10 is installed, an integral multiple of the rotation frequency fr may peak at a large value. Accordingly, a frequency range that does not include the integral multiple of the rotation frequency fr is set as the first frequency range, which is above $fr \times n$ and below $fr \times (n+1)$, so as to detect the peak of the characteristic frequency attributable to damage, as distinguishable from the peak of the integral multiple of the rotation frequency fr. This concept also applies when setting the second frequency range.

If the inner ring 2 has sustained damage and there is slippage occurring between the rolling element 3 and the inner ring 2 or the outer ring 1, the peak of the actual inner ring characteristic frequency will be detected at a position offset relative to the theoretical inner ring characteristic frequency fi. However, the extent of this offset will be affected by conditions such as the rotation number, the torque and the state of lubrication, and thus, the extent of offset cannot be determined theoretically. In addition, if the vibration at the inner ring characteristic frequency is amplitude-modulated by vibration at the rotation frequency, a series of frequency peaks at rotation frequency fr intervals centered on the inner ring characteristic frequency will be detected. In other words, frequency peaks representing the sums of the actual inner ring characteristic frequency and the integral multiples of the rotation frequency fr (i.e., the rotation frequency fr multiplied by 1, 2, ... and -1, -2, ...), as well as the actual inner ring characteristic frequency peak, will be detected. Similar frequency peaks will also be detected for the outer ring characteristic frequency fo.

When there is damage to the inner ring 2, the frequency difference $d = f(m) - f(n)$ will be equal to the product obtained by multiplying the rotation frequency fr by (m -n), with f(n) representing the frequency achieving the highest peak in the first frequency range and f(m) representing the frequency achieving the highest peak in the second frequency range. Accordingly, the arithmetic operation unit 9a compares the absolute value of $d - fr \times (m-n)$ with a reference value j. If the absolute value is less than the reference value j, the arithmetic operation unit 9a determines that the bearing 10 is damaged by regarding the frequency difference and the (m-n) multiple of the rotation frequency as equal to each other. It is to be noted that the reference value j is a predetermined value obtained through testing or the like.

In order to determine whether or not the bearing is damaged, the frequency f(n) achieving the highest peak within the first frequency range set in step S5, is extracted and the frequency f(m), achieving the highest peak within the second frequency range set in step S5, is extracted in step S7 before the operation proceeds to step S9. In step S9, the frequency difference $d = f(m) - f(n)$ represented by the difference between the frequencies f(n) and f(m) extracted in step S7 is calculated and then the operation proceeds to step S11.

In step S11, a decision is made as to whether or not the absolute value ($|d - fr \times (m-n)|$) of the difference between the frequency difference d calculated in step S9 and the (m-n) multiple of the rotation frequency fr is equal to or greater than the predetermined reference value j. If an affirmative decision is made in step S11, the execution of the program ends. However, if a negative decision is made in step S11, the operation proceeds to step S13 to output a signal to the alarm unit 9b, so as to prompt the alarm unit 9b to alert the operator to an abnormality at the bearing 10. It is to be noted that the alarm unit 9b issues an alarm indicating that an abnormality has occurred at the bearing 10 upon receiving the signal from the arithmetic operation unit 9a. Once step S13 is executed, the program ends.

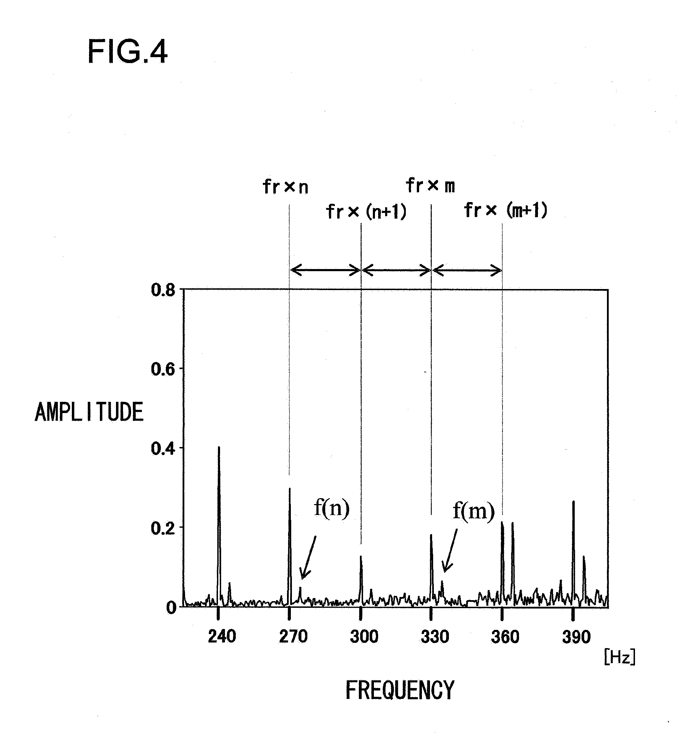

FIG. 4 presents an example of results that may be obtained through frequency analysis executed on a bearing vibration waveform by rotating a cylindrical roller bearing, with the diameter of the rolling element d, the pitch circle diameter of the rolling elements, the number of the rolling elements Z and the contact angle of the rolling element $\alpha$ thereof respectively at 5 mm, 40 mm, 18 and 0°, at 1800 rpm. Under these circumstances, the rotation frequency fr is 30 Hz and the theoretical inner ring characteristic frequency fi of the inner ring 2 sustaining damage at one point thereof is 303.75 Hz. Assuming that t = 1 and r = -1, n takes a value of 9 for the first frequency range, which includes the frequency representing the sum of the product obtained by multiplying the theoretical inner ring characteristic frequency fi (303.75 Hz) by 1_and the product obtained by multiplying the rotation frequency fr (30 Hz) by -1 when the first frequency range is above 270 Hz, i.e., the rotation frequency fr multiplied by 9, and below 300 Hz, i.e., the rotation frequency fr multiplied by 10, as indicated in FIG. 4.

Assuming that c = 1 and e = 1, m takes a value of 11 for the second frequency range, which includes the frequency representing the sum of the product obtained by multiplying the theoretical inner ring characteristic frequency fi (303.75 Hz) by 1 and the product obtained by multiplying the rotation frequency fr (30 Hz) by 1 when the second frequency range is above 330 Hz, i.e., the rotation frequency fr multiplied by 11, and below 360 Hz, i.e., the rotation frequency fr multiplied by 12. The arithmetic operation unit 9a calculates the frequency difference d = f(m) -f(n) based upon the highest peaks f(n) and f(m) in the first frequency range and the second frequency range respectively, and decides that the bearing has sustained damage if the absolute value of the difference obtained by subtracting the (m -n) multiple of the rotation frequency fr, i.e., the rotation frequency fr, multiplied by (m -n) = (11 -9) = 2 from the frequency difference d, is less than the reference value j.

It is to be noted that while the processing executed to detect damage having occurred at the inner ring 2 is described in specific detail above, damage present at the outer ring 1, too, can be detected in much the same way, except that the outer ring characteristic frequency fo, instead of the inner ring characteristic frequency fi, is used in the damage detection processing executed for the outer ring 1. This principle also holds for the second and third embodiments to be described later.

The following advantages are achieved through the bearing damage detection method in the first embodiment described above.

(1) The first frequency range above fr×n and below fr×(n+1) and the second frequency range above fr×m and below fr×(m+1) are set in conjunction with the frequency analysis results and peak frequencies f(n) and f(m) in the first and second frequency ranges are determined. Then, if the absolute value of the difference between the frequency difference d = f(m) -f(n) and the (m -n) multiple of the rotation frequency fr is less than the reference value j, the frequency difference and the (m-n) multiple of the rotation frequency fr are regarded to match each other and the bearing 10 is judged to be damaged. Thus, even when there is slippage between the rolling element 3 and the inner ring 2 or outer ring 1, the frequency of the vibration caused by damage can be detected, thereby assuring reliable detection of damage occurring at the bearing 10.

(2) The highest peak frequency f(n) in the first frequency range and the highest peak frequency f(m) in the second frequency range are extracted and the decision as to whether or not the bearing 10 is damaged is made based upon the highest peak frequencies f(n) and f(m) having been extracted. The highest peak frequency f(n) in the first frequency range and the highest peak frequency f(m) in the second frequency range are each regarded to be a peak of a frequency attributable to vibration occurring as a result of damage at the bearing 10. Since the embodiment allows the frequency peaks attributable to the vibration resulting from damage to the bearing 10 to be detected, the presence/ absence of any damage having occurred at the bearing 10 can be determined with a high level of accuracy.

(3) n is set so that the value representing the sum of the product obtained by multiplying the theoretical inner ring characteristic frequency fi by t and the product obtained by multiplying the rotation frequency fr by r falls into the first frequency range. m is set so that the value representing the sum of the product obtained by multiplying the theoretical inner ring characteristic frequency fi by c and the product obtained by multiplying the rotation frequency fr by e falls into the second frequency range. Through these measures, it is ensured that even when there is slippage between the rolling element 3 and the inner ring 2 or the outer ring 1, the peaks of the actual inner ring characteristic frequency or peaks of frequencies each representing the sum of the actual inner ring characteristic frequency and an integral multiple of the rotation frequency fr are included in the first and second frequency ranges. This means that since optimal ranges can be set as the first and second frequency ranges, the presence/absence of damage at the bearing 10 can be determined with a high level of accuracy.

(4) The first frequency range is set above frxn and below fr×(n+1) and the second frequency range is set above fr×m and below fr×(m+1). A frequency representing an integral multiple of the rotation frequency fr is not included in the first frequency range or the second frequency range set as described above. This means that the highest peak frequencies f(n) and f(m) can be detected as peaks distinguishable from a frequency peak equal to an integral multiple of the rotation frequency fr. As a result, frequency peaks attributable to the vibration resulting from damage to the bearing 10 can be detected, free of any influence of a peak frequency represented by an integral multiple of the rotation frequency fr, so as to assure a high level of accuracy in determining whether or not there is any damage to the bearing 10.

- Second Embodiment -

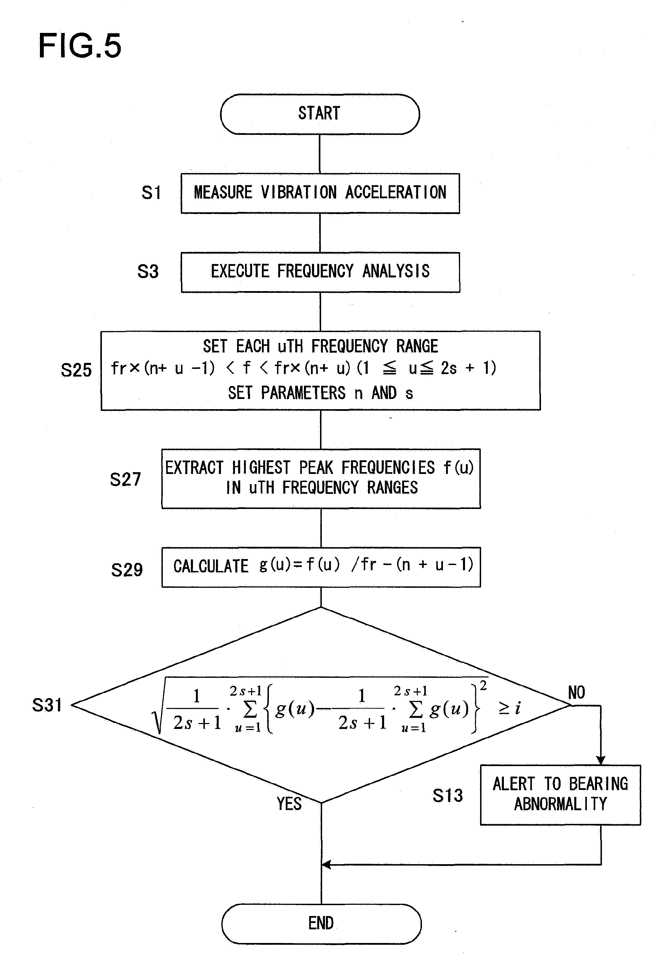

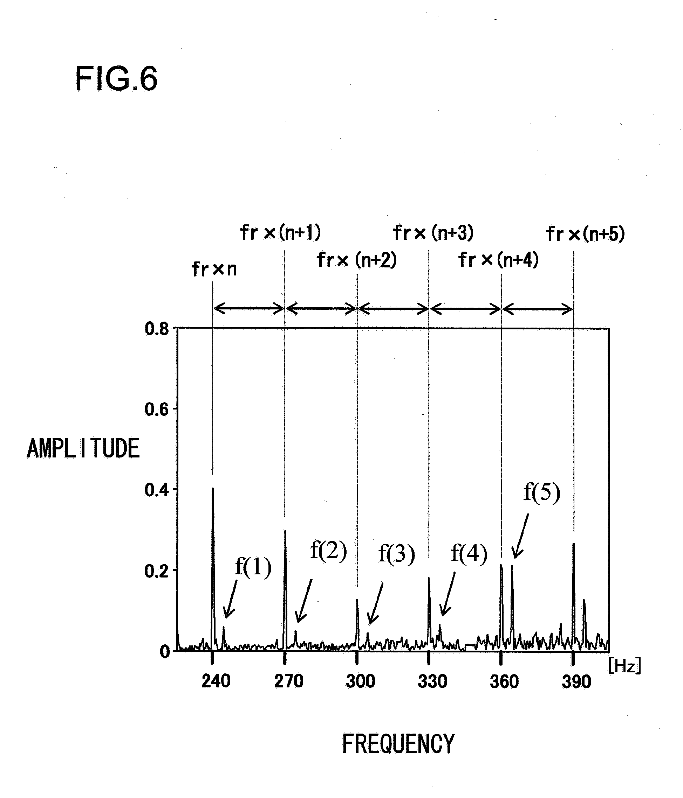

In reference to FIGS. 5 and 6, the second embodiment of the bearing damage detection method according to the present invention is described. The following explanation, which is given by assigning the same reference numerals to components identical to those in the first embodiment, focuses on features differentiating the second embodiment from the first embodiment. Any aspect of the second embodiment that is not specifically noted should be assumed to be identical to that in the first embodiment. The second embodiment differs from the first embodiment primarily in that the presence/absence of damage to the bearing 10 is determined based upon degrees, as will be explained later.

FIG. 5 presents a flowchart of the bearing damage detection processing executed in the second embodiment. It is to be noted that the processing executed to detect damage to the inner ring 2, is described in specific detail below as a representative example. As a power switch (not shown) at the bearing damage detection system is turned on and a bearing damage detection start instruction is issued, a program enabling execution of this processing is cyclically (e.g., every few seconds) started up and the program thus started up is executed by the arithmetic operation unit 9a of the measuring device 9. The processing executed in step S1 and step S3 is identical to that executed in step S1 and step S3 in the flowchart presented in FIG. 3, in reference to which the first embodiment has been described.

Upon executing step S3, the operation proceeds to step S25, in which (2s+1) (s is an integer equal to or greater than 1) frequency ranges, i.e., an odd number of frequency ranges, are set in conjunction with the results of the frequency analysis executed in step S3. These frequency ranges are, in ascending order, a frequency range above frxn (n is an integer equal to or greater than 1) and below fr×(n+1), a frequency range above fr×(n+1) and below fr×(n+2),... and a frequency range above fr×(n+2s) and below fr×(n+2s+1). In addition, n is set so that the value representing the sum of the products obtained by multiplying the theoretical inner ring characteristic frequency fi by t (t is an integer equal to or greater than 1) and the product obtained by multiplying the rotation frequency fr by w (w is an integer) falls into the mid-point frequency range, which is above fr×(n+s) and below fr×(n+s+1), among the (2s +1) frequency ranges.

An odd number of frequency ranges, each defined by the lower limit and the upper limit, the difference between which equals the rotation frequency fr, are set as described above for the following reason. Namely, if the vibration of the inner ring characteristic frequency is amplitude-modulated by vibration at the rotation frequency, a series of frequency peaks at rotation frequency fr intervals centered on the inner ring characteristic frequency will be detected. In other words, a series of frequency peaks centered on the actual characteristic frequency peak, that includes frequency peaks each represented by the sum of the actual characteristic frequency and the product obtained by multiplying the rotation frequency fr by a natural number, and frequency peaks each represented by the difference obtained by subtracting a natural number multiple of the rotation frequency fr from the actual characteristic frequency, will be detected. Accordingly, the odd number of frequency ranges is set by ensuring that the peak of the actual characteristic frequency falls into the mid-point frequency range among the (2s + 1) frequency ranges so as to ensure that the series of frequency peaks includes equal numbers of frequency peaks, each representing the sum of the actual characteristic frequency and a natural number multiple of the rotation frequency fr and frequency peaks each representing the difference obtained by subtracting a natural number multiple of the rotation frequency fr from the actual characteristic frequency. In conjunction with the plurality of frequency ranges set as described above, the actual characteristic frequency and a vibration frequency occurring as the vibration at the actual characteristic frequency undergoes amplitude modulation can be detected with a high level of accuracy, which, in turn, improves the accuracy with which the presence/absence of damage to the bearing 10 is determined based upon degrees, as will be described later.

The value representing the degree of f(u), which is the highest peak frequency in the uth frequency range (u is an integer equal to or greater than 1 and equal to or smaller than 2s + 1) counting from the lowest frequency range among the individual frequency ranges relative to the rotation frequency fr, is expressed as f(u)/ fr. As long as the difference between two successive highest peak frequencies f(u) matches the rotation frequency fr, the difference between the values representing their degrees is 1.

This means that a degree parameter g(u) expressed as; g(u) = f(u) fr-(n+u-1), that represents the portion of the order of f(u) relative to a rotation frequency fr, which follows the decimal point assumes substantially equal values for the individual frequency peaks as long as the difference between successive frequency peaks is equal to the rotation frequency fr. A decision can thus be made as to whether or not the difference between each pair of successive highest peak frequencies f(u) is equal to the rotation frequency fr by determining a standard deviation of the values taken for the degree parameter g(u) manifesting such characteristics as those described above, for u = 1 through u = 2s + 1. The standard deviation of the degree parameter g(u) is then compared with a reference value i, and the bearing is determined to be damaged if the standard deviation of the degree parameter g(u) is less than the reference value i. It is to be noted that the reference value i is a predetermined value obtained through testing or the like.

Accordingly, the frequencies f(u) are extracted in step S27 by extracting the highest peak frequencies in the (2s +1) frequency ranges having been set in step S25 and then the operation proceeds to step S29. In step S29, the degree parameter values g(u) are calculated each based upon one of the frequencies f(u) having been extracted in step S27, before the operation proceeds to step S31.

In step S31, the standard deviation of the degree parameter values g(u) having been calculated in step S29 is determined. The standard deviation of the degree parameter values g(u) can be calculated as expressed in (4) below.

standard deviation =

$$\sqrt{\frac{1}{2s+1} \cdot \sum_{u=1}^{2s+1} \left\{ g(u) - \frac{1}{2s+1} \cdot \sum_{u=1}^{2s+1} g(u) \right\}^2}$$

(4)

A decision is then made as to whether or not the standard deviation of the degree parameter values g(u) is equal to or greater than the reference value i. If an affirmative decision is made in step S31, the execution of the program ends. However, if a negative decision is made in step S31, the operation proceeds to step S13. The processing executed in step S13 is identical to that executed in step S13 in the flowchart presented in FIG. 3, in reference to which the first embodiment has been described earlier.

FIG. 6 presents an example of results that may be obtained through frequency analysis executed on a bearing vibration waveform by rotating a cylindrical roller bearing, with the diameter of the rolling element d, the pitch circle diameter of the rolling elements, the number of the rolling elements Z and the contact angle of the rolling element α thereof respectively at 5 mm, 40 mm, 18 and 0°, at 1800 rpm. When five (s = 2) frequency ranges are set with the mid-point frequency range, into which the theoretical inner ring characteristic frequency fi (303.75 Hz) falls, set above the rotation frequency fr multiplied by 10 and below the rotation frequency fr multiplied by 11, n is equal to 8, since n + s = 10. Accordingly, the five frequency ranges are set as first through fifth frequency ranges defined below.

The first frequency range is above 240 Hz, i.e., the rotation frequency fr multiplied by 8, and below 270 Hz i.e., the rotation frequency fr multiplied by 9. The second frequency range is above 270 Hz, i.e., the rotation frequency fr multiplied by 9, and below 300 Hz i.e., the rotation frequency fr multiplied by 10. The third frequency range is above 300 Hz, i.e., the rotation frequency fr multiplied by 10, and below 330 Hz i.e., the rotation frequency fr multiplied by 11. The fourth frequency range is above 330 Hz, i.e., the rotation frequency fr multiplied by 11, and below 360 Hz i.e., the rotation frequency fr multiplied by 12. The fifth frequency range is above 360 Hz, i.e., the rotation frequency fr multiplied by 12, and below 390 Hz i.e., the rotation frequency fr multiplied by 13.

The highest peak frequencies f(1) through f(5) in the first through fifth frequency ranges in FIG. 6 are determined and then the degree parameter value g(u) is calculated in correspondence to each of the highest peak frequencies. Then, the standard deviation of the five degree parameter values is compared with the reference value i, and if the standard deviation of the degree parameter values g(u) is less than the reference value i, the bearing is determined to be damaged.

In addition to the advantages of the first embodiment, the following advantages are achieved through the bearing damage detection method in the second embodiment described above.

(1) (2s +1) frequency ranges that include a frequency range above frxn and below fr×(n+1), a frequency range above fr×(n+1) and below fr×(n+2) ... and a frequency range above fr×(n+2s) and below fr×(n+2s+1), are set. In addition, n is set so that the value representing the sum of the product obtained by multiplying the theoretical inner ring characteristic frequency fi by t and the product obtained by multiplying the rotation frequency fr by w falls into the midpoint frequency range that is above fr×(n+s) and below fr×(n+1), among the (2s +1) frequency ranges. In conjunction with the plurality of frequency ranges set as described above, the actual characteristic frequency and a vibration frequency occurring as the vibration with the actual characteristic frequency undergoes amplitude modulation can be detected with a high level of accuracy, which, in turn, improves the accuracy with which the presence/absence of damage to the bearing 10 is determined.

(2) The degree parameter g(u) is calculated for each highest peak frequency f(u) relative to the rotation frequency fr, the standard deviation of the degree parameter values g(u) is compared with the reference value i, and the bearing 10 is determined to be damaged if the standard deviation of the degree parameter values g(u) is less than the reference value i. Through these measures, the presence/absence of damage to the bearing 10 can be determined by making a decision, based upon a single parameter, as to whether or not the detected frequencies are the characteristics frequency and vibration frequencies resulting from amplitude modulation of the vibration with the characteristic frequency. As a result, the presence/absence of damage to the bearing 10 can be determined with better accuracy.

- Third Embodiment -

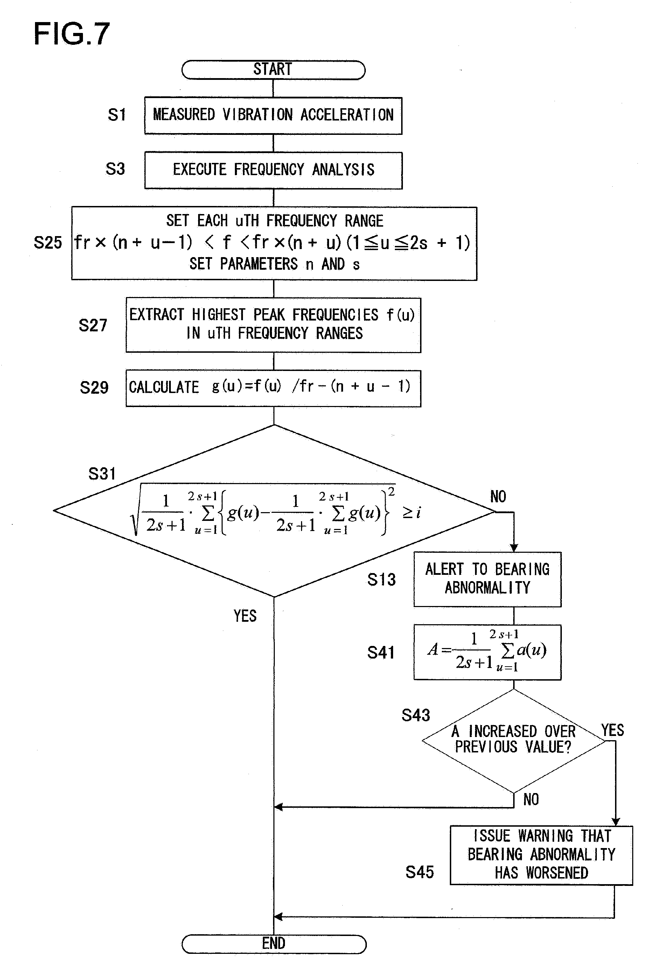

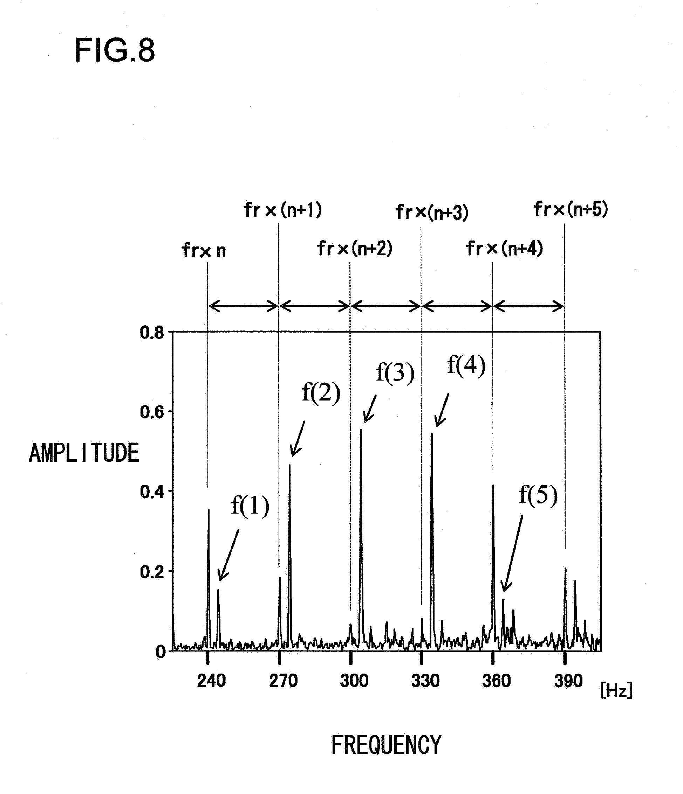

In reference to FIGS. 7 and 8, the third embodiment of the bearing damage detection method according to the present invention is described. The following explanation, which is given by assigning the same reference numerals to components identical to those in the first and second embodiments, focuses on features differentiating the third embodiment from the first or second embodiment. Any aspect of the third embodiment that is not specifically noted should be assumed to be identical to that in the first or second embodiment. The third embodiment differs from the first and second embodiments primarily in that a decision is made as to whether or not the extent of damage to the bearing 10 has increased based upon whether or not the average of the values representing the amplitudes of the highest peak frequencies f(u) in the individual frequency ranges has changed over time, in addition to making a decision as to whether or not damage has occurred at the bearing 10 based upon the degree parameter values g(u) as in the second embodiment.

FIG. 7 presents a flowchart of the bearing damage detection processing executed in the third embodiment. It is to be noted that the processing executed to detect damage to the inner ring 2, is described in specific detail below as a representative example. As a power switch (not shown) at the bearing damage detection system is turned on and a bearing damage detection start instruction is issued, a program enabling execution of this processing is cyclically (e.g., every few seconds) started up and the program thus started up is executed by the arithmetic operation unit 9a of the measuring device 9. The processing executed in step S1 and step S3, the processing executed in steps S25 through S31 and the processing executed in step S13 are identical to those in the corresponding steps in the flowchart presented in FIG. 5, in reference to which the second embodiment has been described.

Upon executing the processing in step S13, the operation proceeds to step S41, in which an average value A of amplitude values a(u) corresponding to the frequencies f(u) for u= 1 through u = (2s + 1) is calculated. The average value A can be calculated as expressed in (5) below.

$$A = \frac{1}{2s + 1} \sum_{u=1}^{2s+1} a(u)$$

$$(5)$$

The average value A thus determined is stored together with information indicating the current time/date into a memory (not shown) and then the operation proceeds to step S43. It is to be noted that the information indicating the current time/date can be obtained from a real-time clock (not shown) in the measuring device 9. If there are any average values A having been stored in the memory (not shown) earlier than the current time/date by at least a predetermined length of time Ta among the average values A stored in the memory, the average value A having been stored most recently among those having been stored earlier than the current time/date by at least the predetermined length of time Ta (hereafter referred to as a previous average value A) is read out and the previous average value thus read out is compared with the average value A having been calculated for the current session in step S41 (hereafter referred to as a current average value A). Then, a decision is made as to whether or not the current average value A is greater than the previous average value A. It is to be noted that an optimal length of time corresponding to the level of the load, the level of importance of the role that the bearing 10 plays in the apparatus in which it is installed, or the like, is set in advance as the predetermined length of time Ta.

A negative decision made in step S43 ends execution of the program. Namely, if there is no average value A having been stored into the memory (not shown) earlier than the current time/date by at least the predetermined length of time or if the current average value A is equal to or less than the previous average value A, the program ends. However, if an affirmative decision is made in step S43, i.e., if the current average value A is determined to be greater than the previous average value A, the operation proceeds to step S45. In step S45, a signal is output to the alarm unit 9b so as to prompt the alarm unit 9b to issue a warning that an abnormality at the bearing 10 has worsened. It is to be noted that the alarm unit 9b issues a warning indicating that the abnormality at the bearing 10 has worsened upon receiving the signal from the arithmetic operation unit 9a. Once the processing in step S45 is executed, the program ends.

FIG. 8 presents an example of results that may be obtained by executing the frequency analysis again after the bearing, pertaining to which the frequency analysis results in FIG. 6 have been obtained, has been used for a specific length of time. Upon deciding, based upon the frequency analysis results presented in FIG. 6, that the standard deviation of g(u) is less than the reference value i and, therefore, that the bearing has been damaged, the arithmetic operation unit 9a calculates the average value A of the amplitude values a(1) through a(5) corresponding to the frequencies f(1) through f(5) respectively and stores the average value A thus calculated into the memory (not shown) together with the current time/date information. In addition, upon subsequently deciding, based upon the frequency analysis results presented in FIG. 8, that the standard deviation of g(u) is less than the reference value i and, therefore, that the bearing has been damaged, the arithmetic operation unit 9a calculates the average value A of the amplitude values a(1) through a(5) corresponding to the frequencies f(1) through f(5) respectively and stores the average value A thus calculated into the memory (not shown) together with the current time/date information

If the average value A having been calculated based upon the frequency analysis results in FIG. 6 has been stored into the memory earlier than the time point at which the average value A is calculated based upon the frequency analysis results in FIG. 8 by an extent equal to or greater than the predetermined length of time Ta, the arithmetic operation unit 9a compares the average value A calculated based upon the frequency analysis results in FIG. 6 with the average value A calculated based upon the frequency analysis results in FIG. 8. Then, if the average value A having been calculated based upon the frequency analysis results in FIG. 8 is greater than the average value A calculated based upon the frequency analysis results in FIG. 6, the arithmetic operation unit 9a decides that the extent of damage to the bearing has increased.

In addition to the advantages of the first and second embodiments, the following advantage is achieved through the bearing damage detection method in the third embodiment described above.

(1) A decision is made as to whether or not the extent of damage to the bearing 10 has increased based upon whether or not the average value of the amplitude values corresponding to the highest peak frequencies f(u) in the individual frequency ranges has changed over time. Through these measures, the extent to which the damage to the bearing 10 has worsened can be determined. This, in turn, makes it possible to ascertain the optimal timing with which the bearing 10 should be replaced. In other words, the bearing 10 can be replaced with optimal timing after it has achieved its full service life.

- Variations -

(1) While the frequency difference d between the highest peak frequencies in two frequency ranges is calculated in the first embodiment described earlier, the present invention is not limited to this example. For instance, the frequency difference d may be calculated in conjunction with three or more frequency ranges. When three frequency ranges, i.e., first through third frequency ranges are set for the calculation of the frequency difference d, the peak frequencies in the first frequency range, the second frequency range and the third frequency range are notated as f(n), f(m) and f(1) respectively. A frequency difference d1 is calculated as; d1 = f(m)-f(n), a frequency difference d2 is calculated as; d2 = f(n)-f(1) and a frequency difference d3 is calculated as; d3 = f(1)-f(m). In this case, the bearing 10 may be determined to be damaged if, for instance, the absolute value of d1-fr×(m-n), the absolute value of d2-fr×(n-1) and the absolute value of d3-fr×(1-m) are all smaller than a reference value j. As an alternative, the bearing 10 may be determined to be damaged if two absolute values (i.e., a majority of the absolute values) among the absolute value of d1-fr×(m-n), the absolute value of d2-fr×(n-1) and the absolute value of d3-fr×(1-m), are less than the reference value j.

(2) In the embodiment described earlier, the decision as to whether or not the bearing 10 has been damaged is made based upon the highest peak frequencies in the individual frequency ranges. However, the present invention is not limited to this example. For instance, a decision as to whether or not the bearing 10 has sustained damage may be made based upon the second highest peak frequency or the third highest peak frequency instead of the highest peak frequency in each frequency range, since a frequency peak attributable to another factor may manifest in a given frequency range.

(3) The first frequency range in the embodiment described earlier, for instance, is set above frxn and below fr×(n+1) so as to ensure that the frequency range does not include an integral multiple of the rotation frequency fr and to ultimately eliminate any influence of a frequency peak representing an integral multiple of the rotation frequency fr. However, the present invention is not limited to this example and it may be adopted in conjunction with a frequency range that includes an integral multiple of the rotation frequency fr. In such a case, a frequency peak equivalent to the integral multiple of the rotation frequency having been detected should be disregarded when making a decision as to whether or not the bearing 10 is damaged, so as to eliminate any influence of the frequency peak representing the integral multiple of the rotation frequency fr.

(4) While an odd number of frequency ranges, with the peak frequencies thereof set apart from one another by an extent matching the rotation frequency fr are set in the second and third embodiments described earlier, an even number of frequency ranges may be set.

(5) While the acceleration sensor 7 in the description provided earlier is a tri-axial acceleration sensor, the present invention is not limited to this example and it may be adopted in conjunction with any acceleration sensor, as long as it is capable of measuring a vibration acceleration manifesting along, at least, one axial direction.

(6) While the description has been given by assuming that the inner ring 2 is a rotating member, the present invention is not limited to this example. For instance, it may be adopted in conjunction with a bearing 10 installed so that the outer ring 1 rotates while the inner ring 2 remains stationary, or in conjunction with a bearing installed so as to allow both the outer ring 1 and the inner ring 2 to rotate. When the bearing 10 is installed so as to allow the outer ring 1 to rotate relative inner ring 2 remains stationary, the acceleration sensor 7 may be mounted at the shaft 6. In such a case, too, expressions (2) and (3) can be directly used to calculate the inner ring characteristic frequency fi and the outer ring characteristic frequency fo. Furthermore, when the bearing 10 is installed so as to allow both the outer ring 1 and the inner ring 2 to rotate, the acceleration sensor 7 may be mounted at the holding member 5 or at the shaft 6.

(7) The embodiments described above and variations thereof may be adopted in any combination.

It is to be noted that the present invention is in no way limited to the particulars of the embodiments described above and any of various damage detection methods that may be adopted to detect damage to a bearing comprising an inner ring, an outer ring, a rolling element that roles in contact with the inner ring and the outer ring, and a cage that holds the rolling elements, characterized in; that vibration of the bearing occurring while a moving ring, which may be either the inner ring or the outer ring, rotates as measured by a sensor; that frequency analysis is executed for a vibration waveform of the vibration at the bearing, obtained through sensor measurement; that at least two frequency ranges, each substantially equal to a range defined by a rotation frequency fr of the moving ring, i.e., either the inner ring or the outer ring, which do not overlap, are set based upon results of the frequency analysis; that peak frequencies, each manifesting in one of the plurality of frequency ranges having been set are determined and; that a difference between the peak frequencies having been determined is compared with a k multiple (k is an integer equal to or greater than 1) of the rotation frequency fr, a decision is made as to whether or not the difference and the k multiple, having been compared with each other may be regarded to match each other and the bearing is determined to be damaged upon deciding that the difference and the k multiple having been compared with each other may be regarded to be matched, is within the scope of the present invention.

In addition, the present invention is in no way limited to the particulars of the embodiments described above and any of various damage detection methods that may be adopted to detect damage to a bearing comprising an inner ring, an outer ring, a rolling element that rolls in contact with the inner ring and the outer ring, and a cage that holds the rolling elements, characterized in; that vibration of the bearing occurring while a moving ring, which may be either the inner ring or the outer ring, rotates, is measured with a sensor that; frequency analysis is executed for a vibration waveform of the vibration at the bearing, obtained through sensor measurement; that Y frequency ranges (Y is an integer equal to or greater than 2), each substantially equal to a range defined by a rotation frequency fr of the moving ring, i.e., either the inner ring or the outer ring, which do not overlap, are set based upon results of the frequency analysis, that highest peak frequencies, each manifesting in one of the Y frequency ranges having been set are determined, and that; a standard deviation of values calculated for a degree parameter $g(u) = f(u)/fr-(n+u-1)$ in correspondence to u (u is an integer equal to or greater than 1 and equal to or smaller than Y) taking values of 1 through Y, with f(u) representing a highest peak frequency in a uth frequency range is determined, and the bearing is determined to be damaged if the standard deviation is less than a reference value, is within the scope of the present invention.

It is to be noted that, while the present invention has been described in reference to the embodiments and variations thereof, it is in no way limited to this example as long as the features characterizing the present invention remain intact. Any other embodiment conceivable within the technical scope of the present invention should, therefore, be considered to be within the range of the present invention.

The disclosure of the following priority application is herein incorporated by reference:

Japanese Publication No. 2010-163774 filed July 21, 2010

## Claims

1. A bearing damage detection method for detecting damage to a bearing, comprising an inner ring, an outer ring, rolling elements that roll in contact with the inner ring and the outer ring, and a cage that holds the rolling elements, the method comprising:

   measuring vibration of the bearing occurring while a moving ring, i.e., either the inner ring or the outer ring, rotates by a sensor;
   executing frequency analysis for a vibration waveform of the vibration at the bearing, obtained through the measuring by the sensor;
   setting at least two frequency ranges each substantially equal to a range defined by a rotation frequency fr of the moving ring, i.e., either the inner ring or the outer ring, which do not overlap, based upon results of the frequency analysis;
   obtaining peak frequencies, each manifesting in one of the plurality of frequency ranges having been set;
   comparing a difference between the peak frequencies having been determined with a k multiple (k is an integer equal to or greater than 1) of the rotation frequency fr;
   making a decision whether or not the difference between the peak frequencies and k multiple of the rotation frequency fr, having been compared with each other may be regarded to be matched; and
   determining that the bearing is to be damaged upon deciding that the difference between the peak frequencies and the k multiple of the rotation frequency fr having been compared with each other may be regarded to be matched.

2. A bearing damage detection method according to claim 1, wherein:

obtaining highest peak frequencies, each manifesting in one of the frequency ranges that do not overlap;
comparing a difference between the highest peak frequencies having been determined with the k multiple of the rotation frequency fr of the moving ring, i.e., either the inner ring or the outer ring;
making a decision whether or not the difference and the k multiple, having been compared may be regarded to be matched; and
determining that the bearing is to be damaged upon deciding that the difference between the peak frequencies and the k multiple of the rotation frequency fr having been compared with each other may be regarded to be matched.

3. A bearing damage detection method for detecting damage to a bearing, comprising an inner ring, an outer ring, rolling elements that roll in contact with the inner ring and the outer ring, and a cage that holds the rolling elements, the method comprising:

measuring vibration of the bearing occurring while a moving ring, i.e., either the inner ring or the outer ring, rotates by a sensor;
executing frequency analysis for a vibration waveform of the vibration at the bearing, obtained through the measuring by the sensor;
setting Y frequency ranges (Y is an integer equal to or greater than 2) each substantially equal to a range defined by a rotation frequency fr of the moving ring, i.e., either the inner ring or the outer ring, which do not overlap, based upon results of the frequency analysis;
obtaining highest peak frequencies, each manifesting in one of the Y frequency ranges having been set;
calculating a standard deviation of values for a degree parameter $g(u) = f(u)/fr-(n+u-1)$ in correspondence to u (u is an integer equal to or greater than 1 and equal to or smaller than Y) taking values of 1 through Y, with $f(u)$ representing a highest peak frequency in a uth frequency range; and
determining that the bearing is to be damaged if the standard deviation is less than a reference value.

4. A bearing damage detection method according to claim 3, wherein:

calculating an average value of amplitude values $a(u)$ of the highest peak frequencies $f(u)$ corresponding to u taking values of 1 through Y; and
determining that the damage to the bearing is to have worsened if the average value has increased over time.

5. A bearing damage detection method according to any one of claims 1 through 4, wherein:

either a frequency peak manifesting due to a vibration occurring as the rolling elements pass a single damage point at the inner ring or a frequency peak manifesting due to a vibration occurring as the rolling elements pass a single damage point at the outer ring, among frequency peaks determined based upon the results of the frequency analysis, is included in one of the frequency ranges that do not overlap.

6. A bearing damage detection method according to any one of claims 1 through 5, wherein:

provided that no slippage occurs between any of the rolling elements and the inner ring or the outer ring, a value representing a sum of a product obtained by multiplying either an inner ring characteristic frequency $fi = (D+d \times \cos \alpha) \times Z \times N/(120 \times D)$ at which the rolling elements pass one point on the inner ring or an outer ring characteristic frequency $fo = (D-d \times \cos \alpha) \times Z \times N/(120 \times D)$ at which the rolling elements pass one point on the outer ring by t (t is an integer equal to or greater than 1) and a product obtained by multiplying the rotation frequency $fr = N/60$ by r (r is an integer), with d, D, Z, $\alpha$ and N respectively representing a diameter of the rolling element, a pitch circle diameter of the rolling elements, a number of rolling elements, a contact angle of the rolling element, and a rotation number of the inner ring or the outer ring, is included in each of the frequency ranges that do not overlap.

7. A bearing damage detection method according to any one of claims 1 through 5, wherein:

the frequency ranges that do not overlap are each set above $fr \times n$ (n is an integer equal to or greater than 1) and below $fr \times (n+1)$.

**8.** A bearing damage detection method according to claim 6, wherein:

the frequency ranges that do not overlap are each set above frxn (n is an integer equal to or greater than 1) and below fr×(n+1).

**9.** A bearing damage detection method according to claim 8, wherein:

(2s+1) frequency ranges (s is an integer equal to or greater than 1) are set so as not to overlap, and the (2s+1) frequency ranges include a frequency range above frxn and below fr×(n+1), a frequency range above fr×(n+1) and below fr×(n+2), ... and a frequency range above fr×(n+2s) and below fr x (n + 2s + 1).

**10.** A bearing damage detection method according to claim 9, wherein:

either fi×t or fo×t is included in the frequency range above fr×(n+s) and below fr×(n+s+1).

# FIG.1

# FIG.2

# FIG.3

START

S1 | MEASURE VIBRATION ACCELERATION

S3 | EXECUTE FREQUENCY ANALYSIS

S5 | SET FREQUENCY RANGES
$fr \times n < f < fr \times (n+1), fr \times m < f < fr \times (m+1)$
SET PARAMETERS n AND m

S7 | EXTRACT HIGHEST PEAK FREQUENCIES
$f(n)$ AND $f(m)$

S9 | CALCULATE $d = f(m) - f(n)$

S11 | $|d - fr \times (m-n)| \geq j$

NO

YES

S13 | ALERT TO BEARING ABNORMALITY

END

# FIG.4

# FIG.5

$$\text{START}$$

S1 | MEASURE VIBRATION ACCELERATION

S3 | EXECUTE FREQUENCY ANALYSIS

S25 | SET EACH uTH FREQUENCY RANGE
$fr \times (n+ u -1) < f < fr \times (n+ u)\ (1 \leqq u \leqq 2s + 1)$
SET PARAMETERS n AND s

S27 | EXTRACT HIGHEST PEAK FREQUENCIES f(u) IN uTH FREQUENCY RANGES

S29 | CALCULATE $g(u) = f(u) / fr - (n + u - 1)$

S31 | $$\sqrt{\frac{1}{2s+1} \cdot \sum_{u=1}^{2s+1} \left\{ g(u) - \frac{1}{2s+1} \cdot \sum_{u=1}^{2s+1} g(u) \right\}^2} \geq i$$

NO

YES

S13 | ALERT TO BEARING ABNORMALITY

$$\text{END}$$

## FIG.6

# FIG.7

START

S1    MEASURED VIBRATION ACCELERATION

S3    EXECUTE FREQUENCY ANALYSIS

S25   SET EACH uTH FREQUENCY RANGE
      $fr \times (n + u - 1) < f < fr \times (n + u) \ (1 \leqq u \leqq 2s + 1)$
      SET PARAMETERS n AND s

S27   EXTRACT HIGHEST PEAK FREQUENCIES f(u)
      IN uTH FREQUENCY RANGES

S29   CALCULATE  $g(u) = f(u) \ /fr - (n + u - 1)$

S31   $\sqrt{\dfrac{1}{2s+1} \cdot \sum\limits_{u=1}^{2s+1} \left\{ g(u) - \dfrac{1}{2s+1} \cdot \sum\limits_{u=1}^{2s+1} g(u) \right\}^2} \geq i$      NO

      YES

S13   ALERT TO BEARING
      ABNORMALITY

S41   $A = \dfrac{1}{2s+1} \sum\limits_{u=1}^{2s+1} a(u)$

S43   A INCREASED OVER      YES
      PREVIOUS VALUE?

      NO

S45   ISSUE WARNING THAT
      BEARING ABNORMALITY
      HAS WORSENED

END

20

# FIG.8

<table>
<tr><td colspan="2">**INTERNATIONAL SEARCH REPORT**</td><td>International application No.<br>PCT/JP2011/066598</td></tr>
</table>

**A. CLASSIFICATION OF SUBJECT MATTER**
*F16C19/52*(2006.01)i, *F16C41/00*(2006.01)i

According to International Patent Classification (IPC) or to both national classification and IPC

**B. FIELDS SEARCHED**

Minimum documentation searched (classification system followed by classification symbols)
F16C19/52, F16C41/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2006/030786 A1 (NSK Ltd.),<br>23 March 2006 (23.03.2006),<br>entire text; all drawings<br>& JP 2006-77938 A      & US 2008/0234964 A1<br>& WO 2006/030786 A      & CN 1906473 A | 1-10 |
| A | JP 2009-020090 A (NSK Ltd.),<br>29 January 2009 (29.01.2009),<br>entire text; all drawings<br>(Family: none) | 1-10 |

☐ Further documents are listed in the continuation of Box C.      ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>05 September, 2011 (05.09.11) | Date of mailing of the international search report<br>13 September, 2011 (13.09.11) |
|---|---|
| Name and mailing address of the ISA/<br>   Japanese Patent Office | Authorized officer |
| Facsimile No. | Telephone No. |

Form PCT/ISA/210 (second sheet) (July 2009)

**EP 2 597 326 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9257651 B

- JP 2010163774 A